# EUROPÄISCHE PATENTSCHRIFT

(11) **EP 2 384 800 B1**
(45) Veröffentlichungstag und Bekanntmachung des Hinweises auf die Patenterteilung: **13.02.2013**
(21) Anmeldenummer: 10162272.8
(22) Anmeldetag: 07.05.2010
(51) Int. Cl.: B01D 15/36, B01J 41/04, B01J 47/02, C25D 3/56, C25D 21/22

(54) **Regeneration alkalischer Zinknickelelektrolyte durch Entfernen von Cyanidionen**
Regeneration of alkaline zinc nickel electrolytes by removing cyanide ions
Régénération d'électrolytes zinc-nickel alcalins par la suppression d'ions de cyanure

(43) Veröffentlichungstag der Anmeldung: 09.11.2011
(73) Patentinhaber: Dr.Ing. Max Schlötter GmbH & Co. KG, 73312 Geislingen/Steige (DE)
(72) Erfinder: Jordan, Dr. Manfred, 73084, Salach (DE); Krauß, Dipl.-Ing. Ralph, 73560, Böbingen (DE); Pfiz, Dr. Roland, 89173, Lonsee (DE)
(74) Vertreter: HOFFMANN EITLE

(56) Entgegenhaltungen:
- EP-A1- 0 601 504
- EP-A1- 1 803 837
- WO-A2-2010/057675
- US-A- 4 895 659
- US-B1- 6 755 960

## Beschreibung

Die Erfindung betrifft die Verwendung eines stark basischen Anionenaustauscherharzes zur Regeneration eines Zinknickelelektrolyten durch Entfernung von Cyanidionen. Außerdem betrifft die vorliegende Erfindung ein Verfahren zur Regeneration eines Zinknickelelektrolyten durch Entfernen von Cyanidionen.

Die Abscheidung von Zinknickellegierungsüberzügen mit einem Anteil von 10-16 Gew.% Nickel bewirkt einen sehr guten Korrosionsschutz auf Bauteilen aus Eisenwerkstoffen und hat daher eine hohe Bedeutung für den technischen Korrosionsschutz. Die Abscheidung kann dabei aus schwach sauren oder aus stark alkalischen Elektrolyten erfolgen. Für die Beschichtung von Bauteilen, insbesondere Zubehörteile für die Automobilfertigung, werden die stark alkalischen Elektrolyte bevorzugt. Diese zeichnen sich gegenüber den schwach sauren Verfahren durch eine wesentlich gleichmäßigere Schichtdickenverteilung aus. Diese Eigenschaft macht sich insbesondere bei komplexen dreidimensionalen Geometrien der zu beschichtenden Bauteile bemerkbar. Zum Erreichen einer vorbestimmten Korrosionsbeständigkeit muss eine Mindestschichtdicke am Bauteil eingehalten werden. Diese beträgt üblicherweise 5 µm. Weist ein Elektrolyt eine schlechte Metallverteilung auf, so bedeutet dies, dass in Bereichen hoher Stromdichten bereits relativ hohe Schichtdicken abgeschieden werden, bevor in Bereichen niedriger Stromdichten die geforderte Mindestschichtdicke erreicht wird. Dieses führt zu einer Verteuerung der Beschichtung durch übermäßigen Metallauftrag. Außerdem können zu hohe Schichtdicken auch zu technischen Problemen führen, wenn z.B. die Maßhaltigkeit funktioneller Bereiche des Bauteiles nicht mehr eingehalten werden kann.

Aus den vorgenannten Gründen werden in der Praxis überwiegend die stark alkalischen Elektrolyte zur Abscheidung von Zinknickellegierungsüberzügen eingesetzt. Zink ist ein amphoteres Metall und liegt darin als Zinkation, Zn[(OH)₄]²⁻, vor. Nickel ist dagegen nicht amphoter und kann daher nicht durch Hydroxidionen komplexiert werden. Alkalische Zinknickelelektrolyte enthalten daher spezielle Komplexbildner für Nickel. Bevorzugt werden Aminverbindungen wie Triethanolamin, Ethylendiamin oder homologe Verbindungen des Ethylendiamins, wie z.B. Diethylentriamin, Tetraethylenpentamin usw. eingesetzt.

Zinknickellegierungselektrolyte werden mit unlöslichen Anoden betrieben. Der Einsatz löslicher Zinkanoden ist nicht möglich, da Zink amphoter ist und sich daher in stark alkalischer Lösung chemisch auflöst. Der Einsatz löslicher Zinkanoden würde daher zu einem starken Zinkanstieg im Elektrolyten führen. In der Praxis nutzt man dieses amphotere Verhalten zur Ergänzung des Zinkgehaltes im Elektrolyten. Dazu werden in einem separaten Zinklösebehälter Zinkstücke im Elektrolyten aufgelöst. Dieser mit Zink angereicherte Elektrolyt wird dann dem Abscheideelektrolyten in dem Maße nachdosiert, wie das Zink bei der Abscheidung verbraucht wird. Die Ergänzung erfolgt in der Regel durch kontinuierliche, automatische Analysen und auf deren Basis angesteuerte Dosierpumpen.

Da Nickel nicht amphoter ist und sich im stark alkalischen Elektrolyten nicht auflöst, eignet es sich als Anodenmaterial für unlösliche Anoden. An der Nickelanode erfolgt als Hauptreaktion die Bildung von Sauerstoff. Außer Nickel sind auch andere Metalle wie Eisen, Edelstahl, Kobalt oder Legierungen der genannten Metalle geeignet. Eine Möglichkeit, um die günstigen Eigenschaften von Nickel als Anodenmaterial zu nutzen, andererseits aber Kosten einzusparen, besteht im Einsatz galvanisch vernickelter Stahlanoden mit Nickelauflagen von ca. 30 µm. Das abgeschiedene Nickel wird in Form geeigneter Ergänzungslösungen, die Nickelsalze mit hoher Wasserlöslichkeit enthalten, ergänzt. Bevorzugt werden dazu Nickelsulfatlösungen eingesetzt.

Es lässt sich in der Praxis leider nicht vermeiden, dass an der Oberfläche der unlöslichen Anoden nicht nur selektiv die Sauerstoffentwicklung erfolgt. Es tritt zum Teil auch eine anodische Oxidation der Badinhaltsstoffe, insbesondere der als Komplexbildner eingesetzten Amine ein. Es entstehen dadurch als Reaktionsprodukte Cyanidionen. In Praxiselektrolyten können sich Werte von bis zu 1000 mg/l Cyanid einstellen, bis ein Gleichgewicht aus Neubildung und Ausschleppung erreicht wird. Die Bildung von Cyaniden ist aus mehreren Gründen nachteilig. Durch den mit der beschichteten Ware ausgeschleppten Elektrolyten gelangen die Cyanide ins Abwasser und müssen dort aufwendig entgiftet werden. Dieses geschieht in der Praxis durch Oxidation, z.B. mit Natriumhypochlorit, Wasserstoffperoxid, Natriumperoxodisulfat, Kaliumperoxomonosulfat oder ähnliche Verbindungen. Da der ausgeschleppte Elektrolyt neben dem Cyanid noch weitere oxidierbare Substanzen enthält, wird zur vollständigen Oxidation wesentlich mehr Oxidationsmittel verbraucht als sich theoretisch aus dem Cyanidgehalt ermitteln ließe.

Aus technischer Sicht ist der Cyanidgehalt im Zinknickelelektrolyten sehr nachteilig. Nickel bildet mit Cyanidionen den stabilen Nickeltetracyanokomplex, Ni[(CN)₄]²⁻. Das in diesem Komplex gebundene Nickel steht für die Abscheidung nicht mehr zur Verfügung. Ein alkalischer Zinknickelelektrolyt enthält ca. 5-15 g/l Zink und 0,6-3 g/l Nickel. Die Nickelkonzentration muss entsprechend der Cyanidkonzentration im Elektrolyten angepasst werden, da der durch Cyanid komplexierte Anteil an Nickel nicht zur Abscheidung zur Verfügung steht. Diese Werte müssen im Laufe des Betriebes sehr genau kontrolliert werden, um die geforderte Legierungszusammensetzung von 10-16 Gew.% Nickel über den gesamten Stromdichtebereich einhalten zu können. Mit der Zunahme des Cyanidgehaltes im Elektrolyten muss der Nickelgehalt entsprechend angepasst werden, um den Nickelanteil in der Schicht konstant halten zu können. Da bei der laufenden Elektrolytanalyse nicht zwischen dem durch Cyanid komplexierten und den durch die Amine komplexierten Nickel unterschieden werden kann, bedeutet der Anstieg des Cyanidgehaltes im Elektrolyten eine Verringerung der Prozesssicherheit. Zur Aufrechterhaltung der geforderten Legierungszusammensetzung müssen außerplanmäßige Ergänzungen von Nickelsalzen zum Elektrolyten vorgenommen werden.

Die Auswirkungen einer Cyanidkonzentration von 350 mg/l in einem handelsüblichen Zinknickellegierungsbad (Zinknickellegierungsbad SLOTOLOY ZN 80, Fa. Schlötter) sind in den nachfolgenden Beispielen dargestellt.

| Elektrolyt | Stromdichte (A/dm²) | Stromausbeute (%) | Legierungs-zusammensetzung (Gew.% Ni) |
|---|---|---|---|
| Neuansatz Slotoloy ZN 80 6,5 g/l Zn; 0,6 g/l Ni | 2 | 50 | 14,3 |
| | 0,5 | 86 | 13,2 |
| Neuansatz Slotoloy ZN 80 6,5 g/l Zn; 0,6 g/l Ni 350 mg/l CN⁻, (660 mg/l NaCN) | 2 | 73 | 8,1 |
| | 0,5 | 83 | 8,9 |
| Neuansatz Slotoloy ZN 80 6,5 g/l Zn; 0,6 g/l Ni 350 mg/l CN⁻, (660 mg/l NaCN) + 0,6 g/l Ni | 2 | 49 | 13,9 |
| | 0,5 | 80 | 14,6 |

Die obigen Versuche zeigen, dass eine bewusste Zugabe von 350 mg/l Cyanid zu einem neu angesetzten Zinknickellegierungsbad SLOTOLOY ZN 80 die Nickeleinbaurate bei einer Abscheidungsstromdichte von 2 A/dm² von 14,3 Gew.% auf 8,1 Gew.% verringert. Um die Legierungszusammensetzung wieder in den spezifizierten Bereich von 10-16 Gew.% zu bringen, ist eine Zugabe von 0,6 g/l Nickel notwendig. Das bedeutet gegenüber dem Neuansatz eine Verdoppelung des Nickelgehaltes im Elektrolyten.

### Die Anreicherung von Cyanid in einem

Zinknickellegierungselektrolyten kann sich auch negativ auf das optische Erscheinungsbild der Abscheidung auswirken. Es kann im hohen Stromdichtebereich zu einer milchigverschleierten Abscheidung kommen. Diese lässt sich zum Teil durch höhere Dosierung von Glanzbildnern wieder korrigieren. Diese Maßnahme ist aber mit einem erhöhten Verbrauch an Glanzbildnern und dadurch Mehrkosten bei der Abscheidung verbunden.

### Wenn die Cyanidkonzentration in einem

Zinknickellegierungselektrolyten Werte von ca. 1000 mg/l erreicht, kann es notwendig werden, den Elektrolyten teilweise zu erneuern. Dadurch steigen wiederum die Abscheidungskosten an. Außerdem fallen bei solchen teilweisen Baderneuerungen große Mengen an Altelektrolyten an, die aufwändig entsorgt werden müssen.

Die Wichtigkeit von Maßnahmen zur Verhinderung der Bildung von Cyanidionen im Elektrolyten bzw. deren Entfernung wird durch die vorstehend beschriebenen negativen Einflüsse auf einen Zinknickelelektrolyten verdeutlicht.

In EP 1 344 850 B1 wird ein Verfahren beansprucht, bei dem der Kathodenraum und der Anodenraum durch eine Ionenaustauschermembran abgetrennt werden. Dadurch wird verhindert, dass die Komplexbildner aus dem Kathodenraum an die Anode gelangen können. Eine Cyanidbildung wird dadurch verhindert. Als Anode wird eine platinierte Titananode eingesetzt. Der Anolyt ist sauer und enthält Schwefelsäure, Phosphorsäure, Methansulfonsäure, Amidosulfonsäure und/oder Phosphonsäure.

Ein ähnliches Verfahren wird in EP 1 292 724 B1 beansprucht. Hier werden ebenfalls Kathoden- und Anodenraum durch eine Ionenaustauschermembran abgetrennt. Als Anolyt wird eine Natrium- oder Kaliumhydroxidlösung eingesetzt. Als Anode wird ein Metall oder ein Metallüberzug aus der Gruppe, die aus Nickel, Kobalt, Eisen, Chrom oder Legierungen davon besteht, ausgewählt.

Bei beiden Verfahren wird die Bildung von Cyaniden verhindert. Nachteilig ist bei beiden Verfahren, dass durch den Einbau der Ionenaustauschermembranen sehr hohe Investitionskosten entstehen. Zusätzlich muss noch eine Vorrichtung für eine getrennte Kreislaufführung des Anolyten installiert werden. Der Einbau von Ionenaustauschermembranen ist bei Verfahren zur Zinknickelabscheidung außerdem nicht generell realisierbar. Zur Erhöhung der Produktivität und somit zur Senkung der Beschichtungskosten werden oftmals Hilfsanoden eingesetzt, um bei dichter Behängung der Gestelle die Schichtdickenverteilung zu optimieren. Aus technischen Gründen ist es hier nicht möglich, diese Hilfsanoden durch Ionenaustauschermembranen abzutrennen. Eine Cyanidbildung kann bei dieser Anwendung daher nicht vollständig vermieden werden.

EP 1 702 090 B1 beansprucht ein Verfahren, welches die Abtrennung des Kathoden- und Anodenraumes durch ein offenporiges Material vorsieht. Der Separator besteht aus Polytetrafluorethylen oder Polyolefin, wie Polypropylen oder Polyethylen. Die Porendurchmesser weisen eine Abmessung zwischen 10 nm und 50 µm auf. Im Unterschied zum Einsatz von Ionenaustauschermembranen, wo der Ladungstransport durch die Membran durch den Austausch von Kationen oder Anionen erfolgt, kann er bei Einsatz von offenporigen Separatoren nur durch den Elektroayttransport durch den Separator erfolgen. Eine vollständige Abtrennung des Katholyten vom Anolyten ist nicht möglich. Es kann daher auch nicht vollständig verhindert werden, dass Amine an die Anode gelangen und dort oxidiert werden. Eine Cyanidbildung ist bei diesem Verfahren daher nicht vollständig auszuschließen. Nachteilig ist bei diesem Verfahren außerdem, dass bei Einsatz von Separatoren mit sehr kleinem Porendurchmesser (z.B. 10 nm) der Elektrolytaustausch und somit der Stromtransport sehr stark behindert ist. Es wird beansprucht, dass die Überspannung weniger als 5 Volt betragen soll. Diese Badspannung wäre gegenüber einem Verfahren, welches ohne Abtrennung von Kathoden- und Anodenraum arbeitet, nahezu verdoppelt. Dadurch ist ein wesentlich höherer Energieverbrauch bei der Abscheidung der Zinknickelschichten gegeben. Die um 5 Volt höhere Badspannung bewirkt außerdem eine starke Erwärmung des Elektrolyten. Da eine Voraussetzung zur Abscheidung einer konstanten Legierungszusammensetzung die Konstanthaltung der Elektrolyttemperatur im Bereich von ±2 °C ist, so ist bei Anliegen einer so hohen Badspannung ein erheblicher Aufwand für die Kühlung des Elektrolyten aufzubringen.

Der Einsatz von Separatoren mit einem Porendurchmesser von 50 µm bewirkt einen nahezu ungehinderten Elektrolytaustausch zwischen Kathoden- und Anodenraum und kann somit die Bildung von Cyaniden nicht verhindern.

Ein ähnliches Konzept wird in der EP 1 717 353 B1 beansprucht. Der Anoden- und Kathodenraum wird dort durch eine Filtrationsmembran abgetrennt. Die Größe der Poren der Filtrationsmembran liegt im Bereich von 0,1 bis 300 nm. Ein gewisser Übertritt von Elektrolyt aus dem Kathoden- in den Anodenraum wird dabei bewusst in Kauf genommen. Bei Verwendung bestimmter organischer Glanzbildner arbeiten Zinknickelelektrolyte nicht zufriedenstellend, wenn Membranverfahren entsprechend EP 1 344 850 oder EP 1 292 724 verwendet werden. Diese Glanzbildner benötigen offensichtlich eine anodische Aktivierung, um ihre volle Wirkung zu erzeugen. Diese Reaktion ist bei Einsatz von Filtrationsmembranen gewährleistet. Allerdings bedingt das auch, dass die Bildung von Cyaniden nicht vollständig vermieden werden kann. Der Tabelle 4 der EP 1 717 353 kann entnommen werden, dass bei Einsatz der Filtrationsmembranen bei einer Badbelastung von 50 Ah/l eine Neubildung von 63 mg/l Cyanid erfolgt. Ohne Einsatz von Filtrationsmembranen erfolgt unter sonst gleichen Bedingungen eine Neubildung von 647 mg/l Cyanid. Der Einsatz der Filtrationsmembranen kann die Neubildung von Cyanid somit um ca. 90% verringern, aber nicht vollständig verhindern.

Alle vorstehend genannten Membranverfahren haben zudem den Nachteil, dass sie einen erheblichen Platzbedarf in einem Badbehälter eines Zinknickelelektrolyten haben. Ein nachträglicher Einbau in eine bestehende Anlage ist daher aus Platzgründen, meistens nicht möglich.

Ferner ist es beispielsweise durch die US 4,732,609 bekannt, Cyanid-haltige Abwässer, die bei der Erzlaugung zur Goldgewinnung anfallen, mit einem stark basischen Anionenaustauscher zu behandeln. Die dortigen Elektrolytbedingungen sind aber nicht mit den Bedingungen in einem stark alkalischen Zinknickelbad vergleichbar. Daher ist es bei der Behandlung der in der US 4,732,609 beschriebenen Abwässer auch nicht das Ziel, Cyanidionen zu entfernen, sondern vielmehr die Metallionen. Als typische Zusammensetzung des Abwassers wird in Beispiel 1 der US 4,732,609 angegeben:
40 ppm Cu
31 ppm Zn
1 ppm Fe
12 ppm Ni
350 ppm freies Cyanid
pH 12,4

Dieses Abwasser wird über eine Säule mit einem stark basischen Anionenaustauscher (Amberlite IRA-400) geleitet. Das Eluat hatte folgende Zusammensetzung:
0,2 ppm Cu
0,1 ppm Zn
0,11 ppm Fe
0,6 ppm Ni
320 ppm freies Cyanid
pH 12,3

Das Ziel bei der Behandlung von Abwasser mit einem Anionenaustauscher besteht somit darin, Metalle aus einem cyanidhaltigen Abwasser vollständig zu entfernen, während das im Überschuss vorhandene Cyanid weitgehend in dem von Metall gereinigten Abwasser verbleiben soll. Dies steht in deutlichem Gegensatz zur Aufgabe der vorliegenden Erfindung, bei der Cyanidionen aus einer Metall-haltigen Lösung vollständig entfernt werden sollen, während die Metallionen-Konzentrationen weitgehend konstant gehalten werden soll. Darüber hinaus ist zu beachten, dass sich die chemische Zusammensetzung des in der US 4,732,609 beschriebenen Abwassers deutlich unterscheidet von der Zusammensetzung eines Zinknickelelektrolyten. Auf Grund der unterschiedlichen chemischen Zusammensetzung und des unterschiedlichen pH-Wertes stellen sich andere chemische Gleichgewichte in den Lösungen ein, weshalb der Fachmann ausgehend von der US 4,732,609 im Hinblick auf eine Regeneration von Zinknickelelektrolyten keine Vorhersagen treffen konnte.

Ähnlich zu dem oben diskutierten Stand der Technik wird in der US 4,895,659 ein Reinigungsverfahren von galvanischen Abfalllösungen ("plating waste solution") beschrieben, durch das Metalle und Cyanid abgetrennt werden sollen. Das Verfahren beinhaltet u.a. einen Schritt, bei dem die Lösung über einen stark basischen Anionenaustauscher geleitet wird, so dass Metallcyanide aus der Lösung entfernt werden. Als mögliche Metalle werden u.a. Zink und Nickel genannt. Ähnlich zur US 4,732,609 unterscheidet sich die Zusammensetzung der Abfalllösung stark von einem Zinknickelelektrolyt.

Die der vorliegenden Erfindung zugrunde liegende Aufgabe besteht in der Bereitstellung eines Mittels und eines Verfahrens zur Regeneration eines Zinknickelelektrolyten durch Entfernen von Cyanidionen.

Überraschenderweise wurde gefunden, dass Cyanidionen durch den Einsatz eines stark basischen Anionenaustauscherharzes aus einem Zinknickelelektrolyten entfernt werden können, ohne die Abscheidebedingungen des Zinknickelelektrolyten dadurch wesentlich zu ändern. Durch die Entfernung der Cyanidionen mittels eines stark basischen Anionenaustauscherharzes lässt sich somit ein Zinknickelelektrolyt regenerieren.

Regeneration bedeutet wörtlich "Wiederherstellung". Im Sinne dieser Erfindung bezeichnet der Begriff "Regeneration" die Wiederherstellung eines Zinknickelelektrolyten in seinen störungsfreien Zustand durch die Entfernung von Cyanidionen, die sich während des Betriebs des Elektrolyten gebildet haben.

Die Abtrennung der Cyanidionen erfolgt in Form des Nickeltetracyanokomplexes. Im Unterschied zur Zusammensetzung des oben erwähnten Abwassers der US 4, 732, 609, wo ein Überschuss an freiem Cyanid gegenüber der Summe der Metalle Kupfer, Zink, Eisen und Nickel vorliegt, liegen in einem Zinknickelelektrolyten die Metalle Zink und Nickel in hohem Überschuss gegenüber dem Cyanid vor. Es kann daher davon ausgegangen werden, dass das Cyanid vollständig als Nickeltetracyanokomplex vorliegt. Restliches Nickel liegt als Komplex mit den Aminen vor, während Zink als Tetrahydroxozinkat, Zn[(OH)₄]²⁻, vorliegt. Die Adsorption von Ionen an den funktionellen Gruppen von Ionenaustauschern erfolgt in Abhängigkeit der Ionenladung und der Ionengröße. In einem mit Cyanid verunreinigtem Zinknickelelektrolyten liegen die Anionen Ni[(CN)₄]²⁻ und Zn[(OH)₄]²⁻ nebeneinander vor. Beide weisen die gleiche Ladung und vergleichbare Größe auf. Es war daher nicht zu erwarten, dass eine selektive Entfernung des Ni[(CN)₄]²⁻-Komplexes möglich wäre, ohne die Austauschersäule übermäßig mit Zn[(OH)₄]²⁻ zu beladen.

Das stark basische Anionenaustauscherharz ist nicht speziell beschränkt, und es können jegliche bekannte stark basische Anionenaustauscherharze zur Regeneration des Zinknickelelektrolyten verwendet werden. Basische Anionenaustauscherharze sind gewöhnlich Kunstharze aus einem organischen Netzwerk, die zahlreiche basische Gruppen aufweisen. Im Fall von stark basischen Anionenaustauscherharzen sind die basischen Gruppen quaternäre Ammoniumgruppen. Synthetische, industriell hergestellte Ionenaustauscher bestehen aus kleinen, porösen Kugeln aus Kunststoff. Die am häufigsten verwendeten Basismaterialien sind hochvernetztes Polystyrol oder Polyacrylat. In der vorliegenden Erfindung wird bevorzugt vernetztes Polystyrol, beispielsweise ein Styrol-Divinylbenzol-Copolymer, eingesetzt. Der Durchmesser der Kugeln beträgt gewöhnlich 0,3 - 1,3 mm. Das Porenvolumen der Kugeln dieser kommerziellen Anionenaustauscher beträgt ca. 50%, welches mit Wasser gefüllt ist.

In der vorliegenden Erfindung wird das Anionenaustauscherharz bevorzugt in der Hydroxidform eingesetzt. Das bedeutet, dass das Gegenion der quaternären Ammoniumgruppe des Anionenaustauscherharzes, das zur Regeneration eines Zinknickelelektrolyten gemäß dieser Erfindung verwendet wird, vorzugsweise ein Hydroxid ist. Beim Austausch werden die Cyanidionen gegen Hydroxidionen ausgetauscht. Da Hydroxidionen ohnehin Bestandteil eines alkalischen Zinknickelbades sind, kommt es somit durch den Austausch zu keiner Veränderung der Badbestandteile. Grundsätzlich ist es aber auch möglich, das Anionenaustauscherharz in einer Salzform, z.B. Chlorid- oder Sulfatform, zu verwenden.

Der Zinknickelektrolyt, der gemäß der vorliegenden Erfindung regeneriert wird, ist ein wässriger Elektrolyt und hat im Neuansatz typischerweise eine Zinkionenkonzentration im Bereich von 5 bis 15 g/l, bevorzugt 6 bis 10 g/l, berechnet als Zink, und eine Nickelionenkonzentration im Bereich von 0,6 bis 3 g/l, bevorzugt 0,6 bis 1 g/l, berechnet als Nickel. Bei Elektrolyten, die schon längere Zeit in der Produktion im Einsatz sind, ist es bedingt durch den Cyanidgehalt erforderlich, die Nickelkonzentration äquivalent zur Cyanidverunreinigung im Elektrolyten zu erhöhen. Die für die Herstellung des Zinknickelelektrolyten verwendeten Zink- und Nickelverbindungen sind nicht speziell beschränkt. Verwendbar sind beispielsweise Nickelsulfat, Nickelchlorid, Nickelsulfamat oder Nickelmethansulfonat. Besonders bevorzugt ist die Verwendung von Nickelsulfat. Ferner enthalten die Zinknickelelektrolyten eine Aminverbindung als Komplexbildner für Nickel. Diese Aminverbindung ist beispielsweise Triethanolamin oder Ethylendiamin oder homologe Verbindungen des Ethylendiamins, wie z.B. Diethylentriamin und Tetraethylenpentamin. Der Komplexbildner oder Mischungen dieser Komplexbildner wird/werden in einer Konzentration im Bereich von 5 g/l bis 100 g/l eingesetzt, bevorzugt 10 bis 50 g/l, noch bevorzugter 20 g/l.

Der Zinknickelelektrolyt ist stark basisch und weist einen pH-Wert von 14 auf. Zur Einstellung des pH-Wertes kann beispielsweise NaOH oder KOH verwendet werden, besonders bevorzugt ist NaOH. Gewöhnlich enthält ein Zinknickelbad 80 bis 160 g/l Natriumhydroxid. Dies entspricht einer etwa 2-4 molaren Lösung.

Der Zinknickelektrolyt kann außerdem verschiedene Zusätze, die üblicherweise zur Abscheidung von Zinknickellegierungen eingesetzt werden, enthalten. Dies sind beispielsweise aromatische oder heteroaromatische Verbindungen als Glanzbildner, wie Benzylpyridiniumcarboxylat oder Pyridinium-N-propan-3-sulfonsäure.

### Bei dem Verfahren zur Regeneration eines

Zinknickelelektrolyten gemäß dieser Erfindung wird der Zinknickelelektrolyt über ein stark basisches Anionenaustauscherharz geleitet. Vorzugsweise befindet sich das stark basische Anionenaustauscherharz in einer Säule, wie es aus dem Stand der Ionenaustauschtechnik bekannt ist. Die Säule wird mit einer Zuleitung für das belastete und einem Ablauf für das gereinigte Bad versehen. In diesen Zu- und Ableitungen sind weitere Ventile vorgesehen, damit das Harz mit Wasser rückgespült und Regeneriermittel zum Regenerieren des Harzes eingespeist werden können. Die Abmessungen der Säule sind so zu bemessen, dass eine lineare Fließgeschwindigkeit bei der Cyanidentfernung von ca. 3-5 m/h erreicht werden kann. Die Regeneration des Zinknickelbades erfolgt vorzugsweise kontinuierlich während des Betriebes des Elektrolyten, d.h. während der Abscheidung von Zinknickellegierungsüberzügen. Bei dem Verfahren dieser Erfindung wird vorzugsweise ein Teilstrom des Zinknickelelektrolyten über eine mit dem Anionenaustauscherharz gefüllte Säule geführt. Das aus der Säule austretende und im Wesentlichen cyanidfreie Eluat wird wieder in das Zinknickelbad zurückgeführt.

Durch das Verfahren der vorliegenden Erfindung ist eine selektive Entfernung des Nickeltetracyanokomplexes möglich. Daher ist es nicht erforderlich, die Regeneration bei einer bestimmten Cyanid-Konzentration aufzunehmen. Die Kreislaufführung des Zinknickelbades könnte daher sofort bei Neuansatz, d.h. bereits bei einer Cyanidkonzentration von 0 mg/l starten, wodurch gewährleistet wird, dass die Cyanidionen kontinuierlich nach Betriebsbeginn entfernt werden können.

Das Nickeltetracyanatanion wird am Anionenaustauscherharz sehr fest gebunden und kann durch die üblichen Techniken der Regeneration mit Natronlaugelösung oder Kochsalzlösung nicht mehr regeneriert werden. Eine Desorption ist möglich, wenn der Komplex durch Behandeln des beladenen Harzes mit verdünnter Schwefelsäure zerstört wird. Bei dieser Maßnahme ist aber ein hoher anlagentechnischer Aufwand zu betreiben, um ein Austreten von Cyanwasserstoffdämpfen zu verhindern. Die Abluft aus der Anlage muss durch einen Luftwäscher, der mit alkalischem Waschwasser (z.B. verdünnte Natronlauge) befüllt ist, gereinigt werden. Ebenso muss die verdünnte Schwefelsäure, die als Eluat aus der Ionenaustauschersäule austritt, mit Natronlauge neutralisiert werden, um ein Entweichen von Cyanwasserstoffdämpfen zu verhindern. Diese cyanidhaltigen Lösungen müssen dann zur vollständigen Entfernung von Cyaniden mit Oxidationsmitteln, wie Natriumhypochlorit, Wasserstoffperoxid oder ähnlichen Oxidationsmitteln behandelt werden. Durch diesen Einsatz von Chemikalien entstehen zusätzliche Kosten. Vorteilhaft ist es daher, wenn das mit Cyaniden beladene Harz nicht regeneriert wird, sondern unter kontrollierten Bedingungen in einer Sondermüllverbrennungsanlage verbrannt wird. Dadurch wird ein Entweichen von Cyaniden in die Umwelt zuverlässig vermieden.

### BEISPIELE

### Erfindungsgemäßes Beispiel 1

Die Entfernung von Cyanid wurde an einem Praxiselektrolyten mit den folgenden Analysenwerten untersucht:
Zn: 7,8 g/l
Ni: 1,45 g/l
NaOH: 98,5 g/l
Cyanid: 775 mg/l

### Eine Chromatographiesäule wurde mit 100 ml

Ionenaustauscherharz K 6362 der Fa. Lanxess in der Chloridform befüllt. Anschließend wurden 500 ml Zinknickelbad Slotoloy ZN 80 mit der oben genannten Zusammensetzung auf die Säule aufgegeben und mit einer Fließgeschwindigkeit von 20 ml/min durch das Harz fließen lassen. Das Eluat wurde in Fraktionen von 100 ml aufgefangen. Zur Analyse wurden nur die Fraktionen 3-5 verwendet. Die Bestimmung des Cyanids erfolgte mit dem Küvetten-Test LCK 319 für leicht freisetzliche Cyanide der Fa. Dr. Lange. Im Eluat wurden die folgenden Werte gefunden:
Zn: 7,5 g/l
Ni: 0,96 g/l
NaOH: 100,8 g/l
Cyanid: 11 mg/l

Im Rahmen der Analysengenauigkeit ist die Konzentration an Zink in der Originalprobe und im Eluat nach dem Ionenaustausch als unverändert anzusehen. Die Verringerung der Cyanidkonzentration beträgt 764 mg/l. Cyanid wurde somit zu 98,6% entfernt.

### Erfindungsgemäßes Beispiel 2

In einem zweiten Versuch wurde das Ionenaustauscherharz nach Herstellerangaben mit 4%-iger Natronlauge aus der Chloridform (Lieferform) in die OH-Form überführt und der Austauschversuch mit der gleichen Badprobe wie oben beschrieben wiederholt. Im Eluat wurden dabei die folgenden Werte gefunden:
Zn: 7,8 g/l
Ni: 0,98 g/l
NaOH: 101,6 g/l
Cyanid: 9,5 mg/l

Die Ergebnisse zeigen, dass die Entfernung des Cyanides mit dem Anionenaustauscher Lewatit K 6362 gleichermaßen in der Chlorid- als auch der Hydroxidform möglich ist.

### Abscheidungsversuche

Die Abscheidung des Praxiselektrolyten mit 775 mg/l Cyanid wurde in einem Hullzellentest nach DIN 50957 überprüft. Die Versuchsbedingungen waren:
Testblech: Stahlblech
Zellstrom: 2 A
Versuchsdauer: 15 Minuten
Elektrolyttemperatur: 35 °C

Ergebnis: Das Testblech zeigte beginnend von der Kante des niedrigen Stromdichtebereiches bis auf etwa 80% des Testbleches eine halbglänzende, edelstahlähnliche Optik. Die restlichen 20% des Testbleches waren mattgrau.

Der Versuch wurde mit der Probe nach dem Durchgang durch den Ionenaustauscher wiederholt. Die Abscheidung zeigte dabei im höchsten Stromdichtebereich wieder eine gleichmäßige halbglänzende Edelstahloptik.

## Patentansprüche

1. Verwendung eines stark basischen Anionenaustauscherharzes zur Regeneration eines Zinknickelelektrolyten durch Entfernen von Cyanidionen in Form des Nickeltetracyanokomplexes, wobei der Zinknickelelektrolyt ein wässriger Elektrolyt ist, der folgende Zusammensetzung umfasst:
ein oder mehrere lösliche Zn(II)-salze in einer Menge von 5-15 g/l berechnet als Zink,
ein oder mehrere lösliche Ni(II)-salze in einer Menge von 0,6-3 g/l berechnet als Nickel, und
eine oder mehrere Aminverbindungen in einer Menge von 5 - 100 g/l,
und wobei der Zinknickelelektrolyt einen pH-Wert von 14 aufweist.

2. Verwendung gemäß Anspruch 1, wobei das Anionenaustauscherharz in der Hydroxidform eingesetzt wird.

3. Verwendung gemäß Anspruch 1 oder 2, wobei das Basismaterial des Anionenaustauscherharzes ein vernetztes Polystyrol ist.

4. Verfahren zur Regeneration eines Zinknickelelektrolyten durch Entfernen von Cyanidionen in Form des Nickeltetracyanokomplexes, **dadurch gekennzeichnet, dass** der Zinknickelelektrolyt über ein stark basisches Anionenaustauscherharz geführt wird , wobei der Zinknickelelektrolyt ein wässriger Elektrolyt ist, der folgende Zusammensetzung umfasst:
ein oder mehrere lösliche Zn(II)-salze in einer Menge von 5-15 g/l berechnet als Zink,
ein oder mehrere lösliche Ni(II)-salze in einer Menge von 0,6-3 g/l berechnet als Nickel, und
eine oder mehrere Aminverbindungen in einer Menge von 5 - 100 g/l,
und wobei der Zinknickelelektrolyt einen pH-Wert von 14 aufweist.

5. Verfahren gemäß Anspruch 4, wobei das Anionenaustauscherharz in der Hydroxidform eingesetzt wird.

6. Verfahren gemäß Anspruch 4 oder 5, wobei als Basismaterial des Anionenaustauscherharzes ein vernetztes Polystyrol verwendet wird.

7. Verfahren gemäß einem der Ansprüche 4-6, wobei der so regenerierte Zinknickelelektrolyt zur Abscheidung von Zinknickellegierungen eingesetzt wird.

## Claims

1. Use of a strongly basic anion exchanger resin for the regeneration of a zinc-nickel electrolyte by removal of cyanide ions in the form of the nickel tetracyano complex, wherein the zinc-nickel electrolyte is an aqueous electrolyte which has the following composition:
one or more soluble Zn(II) salts in a quantity of 5-15 g/litre calculated as zinc,
one or more soluble Ni(II) salts in a quantity of 0.6-3 g/litre calculated as nickel, and
one or more amine compounds in a quantity of 5-100 g/litre,
and wherein the zinc-nickel electrolyte has a pH value of 14.

2. Use according to claim 1, wherein the anion exchanger resin is used in the hydroxide form.

3. Use according to claim 1 or 2, wherein the basic material of the anion exchanger resin is a crosslinked polystyrene.

4. Method for the regeneration of a zinc-nickel electrolyte by removal of cyanide ions in the form of the nickel tetracyano complex, **characterised in that** the zinc-nickel electrolyte is passed over a strongly basic anion exchanger resin, wherein the zinc-nickel electrolyte is an aqueous electrolyte which has the following composition:
one or more soluble Zn(II) salts in a quantity of 5-15 g/litre calculated as zinc,
one or more soluble Ni(II) salts in a quantity of 0.6-3 g/litre calculated as nickel, and
one or more amine compounds in a quantity of 5-100 g/litre,
and wherein the zinc-nickel electrolyte has a pH value of 14.

5. Method according to claim 4, wherein the anion exchanger resin is used in the hydroxide form.

6. Method according to claim 4 or 5, wherein a crosslinked polystyrene is used as the basic material of the anion exchanger resin.

7. Method according to any of claims 4-6, wherein the zinc-nickel electrolyte regenerated in this way is used for the precipitation of zinc-nickel alloys.

## Revendications

1. Utilisation d'une résine échangeuse d'anions fortement basique pour la régénération d'un électrolyte de zinc - nickel par suppression des cyanidiones sous la forme du complexe de tétracyanonickel, où l'électrolyte de zinc - nickel est un électrolyte aqueux, qui comprend la composition suivante :
un ou plusieurs sels de Zn(II) solubles en une quantité de 5 à 15 g/litre, calculée sous forme de zinc,
un ou plusieurs sels de Ni(II) solubles en une quantité de 0,6 à 3 g/litre, calculée sous forme de nickel, et
un ou plusieurs composés amines en une quantité de 5 à 100 g/litre,
et où l'électrolyte de zinc - nickel présente un pH de 14.

2. Utilisation selon la revendication 1, dans laquelle la résine échangeuse d'anions est mise en oeuvre sous forme d'hydroxyde.

3. Utilisation selon la revendication 1 ou 2, dans laquelle la matière de base de la résine échangeuse d'anions est un polystyrène réticulé.

4. Procédé de régénération d'un électrolyte de zinc - nickel par suppression des cyanidiones sous la forme du complexe de tétracyanonickel, **caractérisé en ce que** l'électrolyte de zinc - nickel est conduit au-dessus d'une résine échangeuse d'anions fortement basique, où l'électrolyte de zinc - nickel est un électrolyte aqueux, qui comprend la composition suivante :
un ou plusieurs sels de Zn(II) solubles en une quantité de 5 à 15 g/litre, calculée sous forme de zinc,
un ou plusieurs sels de Ni(II) solubles en une quantité de 0,6 à 3 g/litre, calculée sous forme de nickel, et
un ou plusieurs composés amines en une quantité de 5 à 100 g/litre,
et où l'électrolyte de zinc - nickel présente un pH de 14.

5. Procédé selon la revendication 4, dans laquelle la résine échangeuse d'anions est mise en oeuvre sous forme d'hydroxyde.

6. Procédé selon la revendication 4 ou 5, dans laquelle la matière de base de la résine échangeuse d'anions est un polystyrène réticulé.

7. Procédé selon l'une des revendications 4 à 6, dans lequel l'électrolyte de zinc - nickel régénéré est mis en oeuvre pour le dépôt d'alliages de zinc - nickel.
